# EUROPEAN PATENT SPECIFICATION

(11) **EP 1 433 528 B1**
(45) Date of publication and mention of the grant of the patent: **21.07.2010**
(21) Application number: 02772885.6
(22) Date of filing: 20.09.2002
(51) Int. Cl.: B01J 35/04, B01D 53/94, C04B 41/85

(54) **METHOD FOR MANUFACTURING HONEYCOMB INTERMEDIATE AND HONEYCOMB CATALYST**
VERFAHREN ZUR HERSTELLUNG EINER WABENZWISCHENSTUFE UND EINES WABENKATALYSATORS
PROCEDE DE FABRICATION DE COMPOSANT INTERMEDIAIRE EN NID D'ABEILLE ET D'UN CATALYSEUR EN NID D'ABEILLE

(30) Priority: 28.09.2001 JP 2001299953
(43) Date of publication of application: 30.06.2004
(73) Proprietor: NGK Insulators, Ltd., Nagoya-shi, Aichi 467-8530 (JP)
(72) Inventor: ABE, Fumio, c/o NGK Insulators, Ltd., Nagoya-shi, Aichi 467-8530 (JP); KATO, Yasushi, c/o NGK Insulators, Ltd., Nagoya-shi, Aichi 467-8530 (JP)
(74) Representative: Paget, Hugh Charles Edward
(86) International application number: PCT/JP2002/009727
(87) International publication number: WO 2003/028886

(56) References cited:
- EP-A- 1 063 003
- EP-A2- 0 449 556
- WO-A-02/076614
- JP-A- 4 293 550
- JP-A- 54 026 978
- JP-A- 55 099 344
- JP-A- 55 147 154
- JP-A- 61 129 043
- JP-A- 63 007 845
- JP-A- 63 162 028
- JP-A- 2000 202 307
- JP-A- 2000 301 000
- US-A- 4 675 308
- US-B1- 6 242 072
- PATENT ABSTRACTS OF JAPAN vol. 2000, no. 12, 3 January 2001 (2001-01-03) & JP 2000 237600 A (HITACHI ZOSEN CORP), 5 September 2000 (2000-09-05)

## Description

### Technical Field

The present invention relates to a process for producing honeycomb catalysts, more particularly honeycomb catalysts wherein no surplus catalyst is loaded and accordingly no remarkably thick catalyst layer is substantially formed, at each end of the partition walls of at least one cell-opening end face of the honeycomb catalyst, owing to the cutting operation conducted after catalyst loading (this operation is ordinarily conducted before catalyst loading) and wherein a desired cell-opening area is secured. The present invention is suitably applicable particularly to a honeycomb catalyst of remarkably thin partition wall used in an exhaust gas purifier, etc.

### Background Art

In recent years, honeycomb catalysts widely used in automobile exhaust gas purifiers, etc. have been required to have a higher purification ability in order to respond to an exhaust gas regulation which is becoming severer year by year, and have also been required to have a reduced pressure loss in order to respond to the recent years' demands for low fuel consumption and high output. Under such a situation, there is an active movement of making smaller the partition wall thickness of honeycomb catalyst to achieve increased gas flow and reduced pressure loss and simultaneously reducing the weight and heat capacity of honeycomb catalyst to achieve an elevated purification ability during engine warm-up.

Meanwhile, as the partition wall of honeycomb catalyst has become thinner, there is a problem of an erosion phenomenon that various foreign matter present in exhaust gas is carried by an exhaust gas flow and collides with the partition wall and catalyst of honeycomb catalyst and thereby the partition wall and catalyst of honeycomb catalyst are scraped. For such an erosion phenomenon, there was proposed a honeycomb structure provided, at one or two ends of each partition wall in its longitudinal direction, with a reinforced portion having a higher strength than the general portion of the partition wall (for example, JP-A-2000-51710).

Considering that the erosion phenomenon tends to occur at the exhaust gas-incoming end of each partition wall of honeycomb structure, the above proposal aims at an increase particularly in strength of exhaust gas-incoming end. Ordinarily, honeycomb structures having a reinforced portion only at the exhaust gas-incoming end of each partition wall are in use. In the honeycomb structures having a reinforced portion only at the exhaust gas-incoming end of each partition wall, however, the partition wall end having a reinforced portion is extremely difficult to distinct with naked eyes and therefore an operation of, for example, marking for indication of the front side is necessary during production of honeycomb structure; this has caused a problem in that the operator has an excessive burden. There have also been problems in that at the end of partition wall having no reinforced portion, chipping, etc. tend to occur during, for example, transportation before mounting and that during the firing of honeycomb molded material, a stress is generated owing to the difference in thermal expansion between the end of partition wall having a reinforced portion and the end of partition wall having no reinforced portion and the resulting honeycomb structure tends to cause deformation.

Meanwhile, in conventional production of honeycomb catalyst, there is widely used a process of firing a ceramic-made honeycomb molded material to obtain a honeycomb catalyst carrier, immersing the whole carrier in a solution or dispersion containing a catalyst metal and pulling it up, and drying the resulting honeycomb material at a given temperature to load the catalyst on the whole partition walls of the honeycomb material.

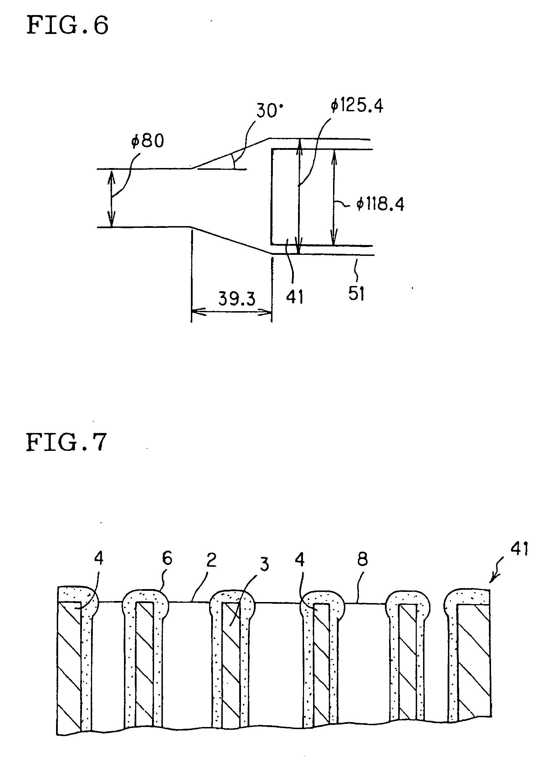

In the honeycomb catalyst obtained by such a process, however, it has happened as shown in Fig. 7 that a catalyst metal 6 is often loaded in excess on the end 4 of each partition wall 3 at the cell-opening end face 8 of the honeycomb catalyst, the end 4 comes to have a larger thickness, resultantly the open end 2 of each cell is narrowed to invite increased pressure loss, and the effect of pressure loss reduction due to the thinning of partition wall 3 is lost.

The present invention has been made in view of the above-mentioned various problems. The first aim of the present invention is to provide a process for producing honeycomb catalysts having thin partition walls which can maintain a designed pressure loss as long as possible. The second aim of the present invention is to provide process for making a honeycomb intermediate structure used in production of such a honeycomb catalyst of the present invention, in which the burden to operator due to, for example, marking for identification of the partition wall end having a reinforced portion is low, the damage such as chipping of end in transportation, etc. is preventable, and deformation of honeycomb molded material during firing is low. The third aim of the present invention is to provide a process for producing a honeycomb catalyst, in which process operations such as marking for indication of the front side is not required during production and therefore the burden to operator is low and there can efficiently be obtained a honeycomb catalyst which is low in damage during production, deformation during firing, and pressure loss.

US 6242072 describes a honeycomb body, which is used as a catalyst carrier, and which has a fortified section with a higher strength than the general section of the body, provided at one or both ends in the length direction of the partition walls. This fortified section can be provided by various methods including thickening or densification of the walls. For example, the starting material for the partition walls is coated and fired onto the partition walls after extrusion molding of the honeycomb body.

### Disclosure of the Invention

The present inventors made various studies in order to achieve the above aims. As a result, it was found that the above-mentioned various problems can be solved by forming, in a honeycomb structure, a reinforced portion at a portion of each partition wall extending from each cell-opening end face of the structure to a given position, to produce a honeycomb intermediate structure per se mountable as a honeycomb catalyst, and then conducting a step (which seems to be extraordinary to those skilled in the art) of cutting the honeycomb intermediate structure along the diameter direction. The above finding has led to the completion of the present invention.

According to the present invention, there is provided a process for producing two honeycomb catalysts, as set out in claim 1.

Preferably the catalyst loaded on each partition wall is a catalyst layer and the maximum thickness of the catalyst layer on a first portion of each partition wall extending along the axial direction of the honeycomb structure from the end face of the honeycomb structure at which a to-be-treated fluid is introduced, to a given position of the partition wall, is not larger than 1.5 times the maximum thickness of a catalyst layer formed on the other portion of the partition wall other than said first portion. Here, "the maximum thickness of a catalyst layer" means the maximum thickness of a catalyst layer per se which is formed on each partition wall, in a direction normal to the axial direction of honeycomb structure, regardless of the site of the partition wall on which the catalyst layer has been formed.

In the honeycomb catalyst produced by the process of the present invention, it is preferred that the maximum thickness of a catalyst layer formed on a portion of each partition wall extending along the axial direction of the honeycomb structure from at least one end face of the honeycomb structure at which a to-be-treated fluid is introduced, to a given position of the partition wall, is not larger than 1.5 times the maximum thickness of a catalyst layer formed on other portion of the partition wall extending along the axial direction of the honeycomb structure. Ordinarily, no substantial thickness variation is seen in the catalyst layer formed on other portion of the partition wall and no substantial difference is seen between the maximum thickness and the average thickness both of the other portion.

It is also preferred that each partition wall has, at its portion present at a given site extending from at least one cell-opening end face of the honeycomb structure along the axial direction of the honeycomb structure, a reinforced portion having an erosion resistance at least larger than that of other portion of the partition wall.

Incidentally, the "given site" refers to a site of a partition wall portion of honeycomb structure extending, along the axial direction of honeycomb structure, from a cell-opening end face of honeycomb structure which undergoes erosion most easily, preferably an end face at which a to-be-treated fluid is introduced, ordinarily to a position of 3 to 15 mm. This site indicates a site of honeycomb structure which undergoes erosion most easily during the mounting of honeycomb structure, and has no direct relation with the size of honeycomb structure per se.

Preferably, the reinforced portion is made of a material which allows the reinforced portion to have a porosity smaller by at least 5% than the main portion of each partition wall constituting a partition wall portion other than the reinforced portion, and/or of a material which allows the reinforced portion to have a porosity of 30% or less.

The reinforced portion may be made of a material which allows the reinforced portion to contain a glass layer in a larger amount than the main portion of each partition wall constituting a partition wall portion other than the reinforced portion. The reinforced portion, when using a base material composed mainly of cordierite, may be formed by loading a cordierite powder on each partition wall made of the base material. In such a reinforced portion, a cordierite powder may be loaded on the surface of each partition wall made of a cordierite base material via a glass layer laminated on the above surface.

The reinforced portion may have a larger wall thickness than the main portion of each partition wall constituting a partition wall portion other than the reinforced portion. In such a reinforced portion, the maximum wall thickness thereof is preferably 1.20 to 4.00 times the average wall thickness of the main portion of each partition wall. It is preferred for prevention of stress concentration that the wall thickness of the reinforced portion decreases continuously or stepwise from at least one cell-opening end face of honeycomb structure to the axial direction of honeycomb structure and is equal, at the boundary of the reinforced portion and the main portion of each partition wall, to the wall thickness of the main portion.

The reinforced portion is preferably formed at part or the whole of a partition wall portion extending along the axial direction of honeycomb structure from at least one cell-opening end face of honeycomb structure to a position of 30 mm or less. In this case, the individual reinforced portions may be formed at a constant length from at least one cell-opening end face of honeycomb structure to the axial direction of honeycomb structure; however, at least part of the individual reinforced portions are preferred to be formed at different lengths. Of course, all the reinforced portions may be formed at different lengths.

Also a particularly striking effect is obtainable when the minimum thickness of each partition wall is 0.030 to 0.076 mm.

The axial direction length of the honeycomb intermediate structure is preferred to be specifically 80 to 200 mm.

Also in the present invention, the reinforced portion is formed preferably at part or the whole of a portion of each partition wall extending from each cell-opening end face of the honeycomb intermediate structure to a position of 30 mm or less along the axial direction of the structure. In this case, the individual reinforced portions may be formed so as to extend at a constant length from at least one cell-opening end face of the structure along the axial direction of the structure, or may be formed at different lengths. Further in the present invention, a particularly striking effect is obtainable when the minimum thickness of each partition wall is 0.030 to 0.076 mm.

The honeycomb intermediate structure used in the present invention may be made by a process including
a step of forming a puddle composed mainly of a ceramic and/or a metal,
a step of obtaining a honeycomb molded material having a plurality of partition walls which form a plurality of cells adjacent to each other,
a step of drying the honeycomb molded material,
a step of as necessary firing the dried honeycomb molded material to form a honeycomb carrier,
a step including the formation, at part or the whole of each portion of each partition wall of the honeycomb carrier, which portion is present at a given site extending from each cell-opening end face of the carrier along the axial direction of the carrier, of a reinforced portion having a larger erosion resistance than other partition wall portion,
thereby producing a honeycomb intermediate structure having reinforced portions of large erosion resistance.

In the present invention, after loading of a catalyst on the partition walls of the honeycomb intermediate structure or after cutting of the resulting honeycomb intermediate structure from the side surface along the diameter direction, the end of each partition wall at least at one cell-opening end face of the structure, preferably at a cell-opening end face at which a to-be-treated fluid is introduced, may be polished or cut for finishing for removal of the burr, etc. remaining after cutting.

The cutting of the honeycomb intermediate structure may be conducted at equal intervals along the diameter direction of the structure.

### Brief Description of the Accompanying Drawings

Fig. 1 is a sectional view schematically showing a reference honeycomb catalyst.
Fig. 2 is a sectional view showing an example of the partition wall and catalyst constituting the reference honeycomb catalyst.
Fig. 3 is a sectional view schematically showing other example of a reference honeycomb catalyst.
Fig. 4 is a sectional view schematically showing an example of the honeycomb intermediate structure of the present invention.
Fig. 5(a)-5(e) are drawings of individual steps schematically showing an example of the present process for producing a honeycomb catalyst.
Fig. 6 is a partial sectional view schematically showing a pressure loss measurement apparatus used for evaluating the honeycomb catalysts produced in Examples and Comparative Examples.
Fig. 7 is a partial sectional view schematically showing a conventional honeycomb catalyst.

### Mode for Carrying Out the Invention

The present invention is described specifically below based on the modes for preferably carrying out the present invention.

### 1. Honeycomb catalyst

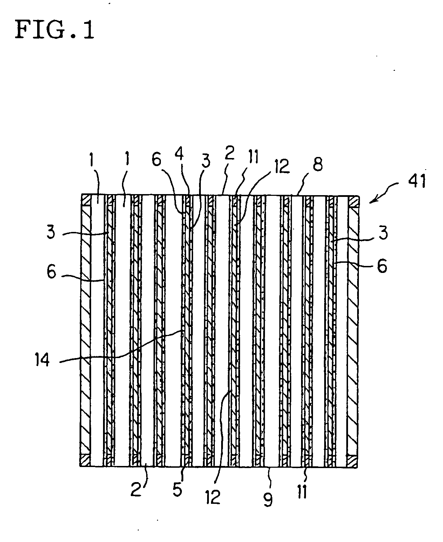

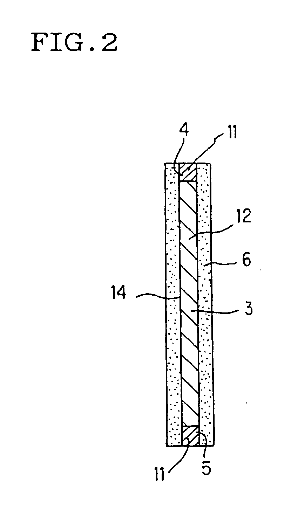

As shown in Fig. 1 and Fig. 2, the honeycomb catalyst 41, which is here described for reference, has a plurality of partition walls 3 which form a plurality of cells 1 adjacent to each other and a catalyst 6 loaded on at least part of each partition wall 3. The catalyst 6 is loaded on each partition wall 3 in such a way that the maximum thickness of a catalyst layer formed on the end 4 of each partition wall 3 at least at one cell-opening end face 8 or 9 of the honeycomb catalyst is not larger than 1.5 times the maximum thickness of a catalyst layer formed on the central portion 14 of each partition wall along the axial direction of the honeycomb catalyst.

Thereby, the open end 2 of each cell 1 formed by each partition wall 3 having such an end 4 can have a larger opening area, enabling a reduced pressure loss. Further, in such a honeycomb catalyst 41, there is no excessive loading of catalyst 6 at the end 4 of partition wall 3 at the exhaust gas-incoming end face of honeycomb catalyst (corresponding to a cell-opening end face 8 or 9) where an erosion phenomenon appears most; consequently, a secondary erosion phenomenon caused by the peeling of catalyst 6 can be prevented.

In order to make the opening area of cell 1 nearly the same as the sectional area of cell 1 in its diameter direction to obtain the above-mentioned effect at a higher level, the catalyst 6 is loaded on each partition wall 3 in such a way that the maximum thickness of a catalyst layer formed on the end 4 of each partition wall 3 at least at one cell-opening end face 8 or 9 of the honeycomb catalyst 41 is preferably not larger than 1.3 times, more preferably not larger than 1.1 times the maximum thickness of a catalyst layer formed on the central portion 14 of each partition wall along the axial direction of the honeycomb catalyst 41.

Further, in order to obtain the above-mentioned effect as reliably as possible, it is preferred that the catalyst 6 is loaded at the above-mentioned thickness at the ends 4 and 5 of each partition wall 3 at the two cell-opening end faces 8 and 9. However, in order to obtain the above-mentioned effect efficiently in simple production, it is also preferred that the catalyst 6 is loaded at the above-mentioned thickness at the end 4 of each partition wall 3 at one cell-opening end face 8 or 9. Incidentally, in this case, the end 4 of each partition wall 3 on which the catalyst 6 is loaded at the above-mentioned particular thickness is preferred to be provided at the exhaust gas-incoming end face in order to prevent the secondary erosion caused by peeling of catalyst and obtain a large reduction in pressure loss.

As a method for forming this honeycomb catalyst, at the ends 4 and 5 of each partition wall 3 at the cell-opening end faces 8 and 9, a catalyst layer 6 having the maximum thickness of not larger than 1.5 times, preferably 1.5 to 1.1 times the maximum thickness of a catalyst layer formed on the central portion 14 of each partition wall along the axial direction of honeycomb catalyst 41, there can be mentioned a method of loading a catalyst 6 on the whole each partition wall of honeycomb carrier by so-called dipping and then polishing or cutting, by the use of a diamond cutter or the like, the end 4 of each partition wall 3 at one cell-opening end face 8 or 9 at which the catalyst 6 is loaded in excess. However, in view of efficient production, in the invention the honeycomb catalyst 41 is cut along the diameter direction as in the later-described process for production of honeycomb catalyst according to the present invention.

As the plurality of partition walls 3 in the honeycomb catalyst 41, there can be mentioned, for example, those made of at least one kind of ceramic material selected from cordierite, mullite, alumina, aluminum titanate, zirconia, titania, silicon nitride and silicon carbide.

Also in the honeycomb catalyst 41, , there is no particular restriction as to the thickness of partition wall 3. However, a honeycomb catalyst 41 having thin partition walls 3 is preferred because it can give a low pressure loss and an improved purification ability during engine warm-up, brought about by the lighter weight and smaller heat capacity. The minimum partition wall thickness is preferred to be specifically 0.030 to 0.076 mm and more preferred to be 0.030 to 0.065 mm. Incidentally, generally in a honeycomb catalyst 41 having thin partition walls 3, an increase in pressure loss is especially striking because of excessive loading of a catalyst 6 at the cell-opening end faces 8 and 9. However, in the honeycomb catalyst 41, such a conventional problem has been solved and the above minimum partition wall thickness is preferably applicable especially in a honeycomb catalyst 41 having thin partition walls 3.

In a honeycomb catalyst 41 having thin partition walls 3, there is a problem of erosion caused by foreign matter present in an exhaust gas. Hence, it is preferred to provide, at part or the whole of a partition wall portion present at a given site of partition wall extending from at least one end face 8 of two cell-opening end faces 8 and 9 along the axial direction of honeycomb catalyst, a reinforced portion 11 having an erosion resistance at least larger than that of other partition wall portion.

As the reinforced portion 11 provided in the honeycomb catalyst, the followings can be mentioned because they show a large erosion resistance and can suppress the increase in pressure loss.
(1) A reinforced portion 11 constituted by a material having a porosity of 30% or less.
(2) A reinforced portion 11 constituted by a material containing a glass layer in a larger amount than the main portion 12 of partition wall constituting a partition wall portion other than the reinforced portion 11.
(3) A reinforced portion 11 formed by loading a cordierite powder on a cordierite base material. This reinforced portion 11 may be formed by loading a cordierite powder on a cordierite base material via a glass layer laminated on the base material, and it gives a larger abrasion resistance.

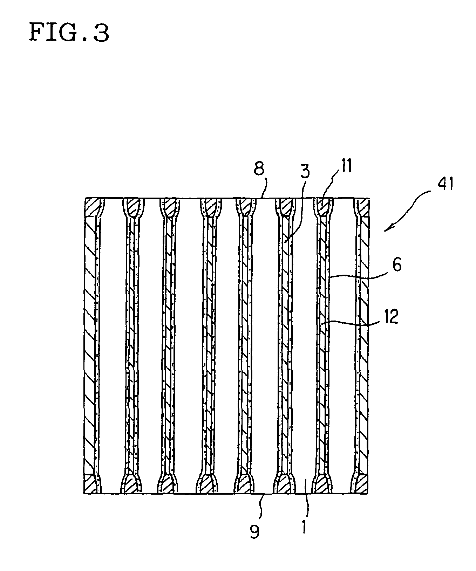

As shown in Fig. 3, the reinforced portion 11 may have a larger wall thickness than the main portion 12 of partition wall constituting a partition wall portion other than the reinforced portion 1. In such a reinforced portion 11, the maximum partition wall thickness of the reinforced portion 11 is preferably 1.20 to 4.00 times the average wall thickness of the main partition wall portion 12. Also, it is preferred for prevention of stress concentration that the wall thickness of the reinforced portion 11 decreases continuously or stepwise from at least one cell-opening end face 8 or 9 to the axial direction of honeycomb catalyst and is equal, at the boundary of the reinforced portion 11 and the main portion 12 of each partition wall, to the wall thickness of the main portion 12. Incidentally, various reinforced portions 11 mentioned above may be used in one kind alone or in combination of two or more kinds.

The reinforced portion 11 is preferred to be provided, in order to satisfy both of erosion resistance and low heat capacity, at part or the whole of a partition wall portion extending along the axial direction of honeycomb catalyst from at least one cell-opening end face 8 or 9 of honeycomb catalyst to a position of 30 cm or less, and is more preferred to be provided at part or the whole of a partition wall portion extending along the axial direction of honeycomb catalyst from at least one cell-opening end face 8 or 9 of honeycomb catalyst to a position of 1 to 10 cm. Further, the individual reinforced portions 11 may be provided at a constant length extending from at least one cell-opening end face 8 or 9 along the axial direction of honeycomb catalyst; however, at least part of the individual reinforced portions are preferred to be provided at different lengths in order to satisfy both of erosion resistance and low heat capacity.

In the present invention, there is no particular restriction as to the kind of the catalyst 6 to be loaded on the partition walls 3, and there can be mentioned, for example, metals having a catalytic activity, such as Pt, Pd, Rh and the like.

As the cells 1 formed by the partition walls 3, there can be mentioned, for example, those having sectional shapes such as circle, ellipse, tetragon, octagon and special shape whose left and right sides are asymetric. The cell density of the cells 1 formed by the partition walls 3 is preferably 6 to 2,000 cells/in.² (0.9 to 311 cells/cm²), more preferably 50 to 400 cells/in.² (7.8 to 62 cells/cm²) in view of the strength and effective GSA (geometrical surface area) of honeycomb catalyst 41 and the pressure loss when a gas flows therethrough.

There is no particular restriction, either, as to the shape of honeycomb catalyst 41. There can be mentioned, for example, those having diameter direction sectional shapes such as triangle, rectangle, square, rhombus, trapezoid, oval, circle, track circle, semi-oval and semi-circle.

### 2. Honeycomb intermediate structure

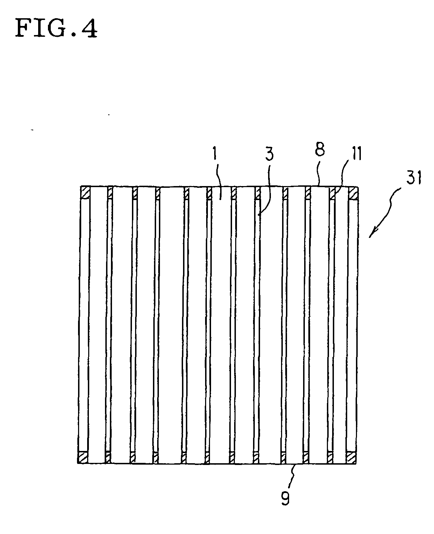

As shown in Fig. 4, the example of the honeycomb intermediate structure 31 which is used in the present invention has a plurality of partition walls 3 which form a plurality of cells 1 adjacent to each other, wherein each partition wall 3 has, at its portion present at a given site extending from each of the cell-opening end faces 8 and 9 of the structure along the axial direction of the structure, a reinforced portion 11 having an erosion resistance at least larger than that of other portion of each partition wall.

In production of this honeycomb intermediate structure, since operations such as marking for identification of the partition wall end 4 having a reinforced portion 11 are not necessary, the burden to operator can be alleviated. Moreover, since a reinforced portion 11 having a large erosion resistance is provided at each partition wall end 4 at the two cell-opening end faces 8 and 9 of the honeycomb intermediate structure, damage such as chipping during transport, etc. can be prevented. Furthermore, since reinforced portions 11 are provided in good balance at the two cell-opening end faces 8 and 9, the stress appearing owing to the thermal expansion difference during firing is alleviated, enabling reduction in deformation.

The honeycomb intermediate structure 31 has a catalyst loaded on at least part of the partition walls 3. Further, the honeycomb intermediate structure 31 of the present invention is preferred to have an appropriate direction in the axial direction, in view of the axial direction length of honeycomb catalyst finally obtained and the to-be-cut position of honeycomb intermediate structure 31. The axial direction length of the honeycomb intermediate structure 31 is preferred to be specifically 80 to 200 mm.

As to the specifics of the partition wall 3, cell 1, catalyst 6, material, dimension, shape, etc. of the honeycomb intermediate structure 31, no explanation is made here because they are not substantially different from those of the reference honeycomb catalyst described above.

Each reinforced portion 11 provided to each partition wall 3 is different from the catalyst layer of the honeycomb catalyst in that the reinforced portion 11 is provided at part or the whole of each partition wall portion present at a particular site extending from each of the cell-opening end faces 8 and 9 of honeycomb intermediate structure 31 along the axial direction of the structure 31. Each reinforced portion 11 is preferred to be provided at part or the whole of each partition wall portion extending from each of the cell-opening end faces 8 and 9 to a position of 30 mm or less along the axial direction, and is more preferred to be provided at part or the whole of each partition wall portion extending from each of the cell-opening end faces 8 and 9 to a position of 1 to 10 mm. In this case, the individual reinforced portions 11 may be provided at a constant length from the two cell-opening end faces 8 and 9 along the axial direction; however, at least part of the reinforced portions are preferred to be provided at different lengths in order to satisfy both of erosion resistance and low heat capacity.

As to the specifics other than those of the reinforced portions 11, no explanation is made here because there is no substantial difference between the honeycomb intermediate structure and the reference honeycomb catalyst described above.

By loading a catalyst on the partition walls 3 of the honeycomb intermediate structure 31 of the present invention and cutting the resulting structure from the side surface 18 along its diameter direction, there can be obtained a honeycomb catalyst wherein the maximum thickness of the catalyst layer formed at each partition wall end at least at one cell-opening end face of honeycomb catalyst is not larger than 1.5 times the maximum thickness of the catalyst layer formed on the central partition wall portion along the axial direction of the honeycomb catalyst and wherein each partition wall has, at its given portion extending from one cell-opening end face, preferably an exhaust gas-incoming end face of the honeycomb catalyst along the axial direction of the honeycomb catalyst, a reinforced portion having an erosion resistance at least larger than that of other partition wall portion. That is, there can be obtained a honeycomb catalyst which has a large erosion resistance and shows a large reduction in pressure loss. The honeycomb intermediate structure according to the present invention can be suitably used in production of, in particular, a honeycomb catalyst having thin partition walls, specifically a honeycomb catalyst having the minimum partition wall thickness of 0.030 to 0.076 mm.

### 3. Process for production of honeycomb catalyst

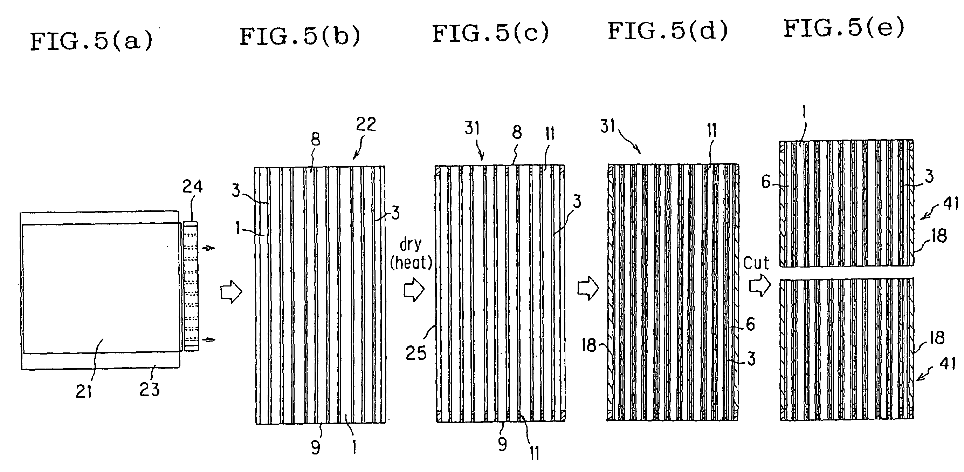

As shown in Figs. 5(a) to 5(e), the process for producing a honeycomb catalyst 41 according to the present invention is characterized by loading a catalyst 6 on each partition wall 3 of the honeycomb intermediate structure 31 obtained by the steps shown in Figs. 5(a) to 5(c), as shown in Fig. 5(d), and then cutting the resulting honeycomb intermediate structure 31 from its side surface 18 along its diameter direction, as shown in Fig. 5(e). Thereby, operations such as marking for indication of front side are not required in production and the burden to operator can be alleviated; further, damage of honeycomb structure during production and deformation during firing of honeycomb molded material are small and a honeycomb catalyst 41 having a low pressure loss during use is obtained. Each production step is explained specifically below with referring to accompanying drawings.

In the production process of the present invention, first, a puddle 21 mainly composed of a ceramic and/or a metal is molded to obtain a honeycomb molded material 22 having a plurality of partition walls which form a plurality of cells adjacent to each other.

As the ceramic which is a main component of the puddle 21, there can be mentioned, for example, at least one kind selected from the group consisting of silicon, titanium, zirconium, silicon carbide, boron carbide, titanium carbide, zirconium carbide, silicon nitride, boron nitride, aluminum nitride, alumina, zirconia, mullite, materials for cordierite formation, aluminum titanate and sialon. As the metal which is a main component of the puddle 21, there can be mentioned, for example, at least one kind selected from the group consisting of copper, aluminum, iron, nickel and silicon. These ceramics and metals can be used alone or in combination of two or more kinds.

The puddle 21 may as necessary contain molding aids besides the ceramic and metal, and can contain, for example, a binder, an aid for crystal growth, a dispersing agent and a hole-making agent. The binder may be any binder which is used in such molding and there is no particular restriction. There can be used, for example, hydroxypropyl methyl cellulose, methyl cellulose, hydroxyethyl cellulose, carboxymethyl cellulose, or a polyvinyl alcohol. The aid for crystal growth may be any aid for crystal growth which is used in such molding and there is no particular restriction. There can be used, for example, magnesia, silica, yttria, or iron oxide. The dispersing agent may be any dispersing agent which is used in such molding and there is no particular restriction. There can be used, for example, ethylene glycol, dextrin, a fatty acid soap, or a polyhydric alcohol. The hole-making agent may be any hole-making agent which is used in such molding and there is no particular restriction. There can be used, for example, graphite, wheat flour, starch, a phenolic resin, or a polyethylene terephthalate.

Incidentally, the puddle 21 can be obtained by mixing a given amount of water into a given amount of a raw material containing mainly a ceramic and/or a metal, adding thereto a binder, etc. as necessary, then kneading the resulting material according to an ordinary method.

In the production process of the present invention, there is no particular restriction as to the method for molding the puddle 21. However, extrusion molding is preferred for the excellency in mass production. It is preferred to use an extruder 23 such as ram extruder or twinscrew continuous extruder and, as shown in Fig. 5(a), extrude a puddle 21 from a die 24 having a desired pattern.

In the present invention, there is no particular restriction as to the thickness of each partition wall 3 of the honeycomb molded material 22 obtained. However, the honeycomb molded material 22 is preferred to have thin partition walls 3. The minimum partition wall thickness is preferred to be specifically 0.030 to 0.076 mm and is more preferred to be 0.030 to 0.065 mm. The reason is that the resulting honeycomb catalyst is superior in erosion resistance (this becomes a problem particularly in honeycomb catalysts having thin partition walls) as well as in pressure loss when a catalyst has been loaded.

As the cells 1 formed by the partition walls 3 of the honeycomb molded material 22, there can be mentioned, for example, those having sectional shapes such as circle, ellipse, tetragon, octagon and special shape whose left and right sides are asymetric. The cell density of the cells 1 formed by the partition walls 3 is preferably 6 to 2,000 cells/in.² (0.9 to 311 cells/cm²), more preferably 50 to 400 cells/in.² (7.8 to 62 cells/cm²) in view of the strength and effective GSA (geometrical surface area) of honeycomb catalyst and the pressure loss when a gas flows therethrough.

The shape of the honeycomb molded material 22 may be appropriately determined depending upon the intended application. As the sectional shape in the diameter direction, there can be mentioned, for example, triangle, rectangle, square, rhombus, trapezoid, oval, circle, track circle, semi-oval or semi-circle.

In the production process of the present invention, then, the honeycomb molded material 22 is dried to obtain a honeycomb carrier 25; then, as schematically shown in Fig. 5(c), there is provided, at each portion of partition wall 3 extending from the two cell-opening end faces 8 and 9 of the honeycomb carrier 25 along the axial direction, a reinforced portion 11 having an erosion resistance at least larger than that of other partition wall portion; thereby, a honeycomb intermediate structure 31 is produced. Depending upon the case, firing may be conducted in place of or after the drying.

There is no particular restriction as to the method for drying the honeycomb molded material 22. There can be mentioned, for example, hot-air drying, microwave drying, dielectric drying, reduced pressure drying, vacuum drying and freeze drying. Especially, dielectric drying, microwave drying and hot-air drying are preferred to be used alone or in combination. The conditions for firing may be appropriately selected depending upon the kinds of the materials used.

As the reinforced portion 11 provided in the honeycomb intermediate structure 31 of the present invention, the followings are preferred because they show a large erosion resistance and can suppress an increase in pressure loss.
(1) A reinforced portion 11 constituted by a material having a porosity of 30% or less.
(2) A reinforced portion 11 constituted by a material containing a glass layer in a larger amount than the main portion 12 of partition wall constituting a partition wall portion other than the reinforced portion 11.
(3) A reinforced portion 11 formed by loading a cordierite powder on a cordierite base material.

The reinforced portion 11 mentioned in the above (1) can be formed ordinarily by using, as a raw material, talc having a small average particle diameter, specifically talc having an average particle diameter of 7 µm or less and kaolin having an average particle diameter of 1/3 or less of that of the talc. Actually, it is preferred to use a raw material which is a combination of coarse particle talc having an average particle diameter of 7 µm or more, fine particle talc having an average particle diameter of 2/3 or less of that of the coarse particle talc, coarse particle kaolin having an average particle diameter of 7 µm or more, and fine particle kaolin having an average particle diameter of 2/3 or less of that of the coarse kaolin.

The reinforced portion 11 mentioned in the above (2) can be formed, for example, by drying, or drying and firing the honeycomb molded material 22, then heating and melting the surface of each end 4 of each partition wall 3 at the two cell-opening end faces 8 and 9 of the resulting material, and solidifying the melted part. In this case, the end 4 of the partition wall 3 may be heated using, for example, a halogen heater, a laser beam or an electromagnetic wave. The end 4 of the partition wall 3 is melted preferably within 50 µm, more preferably within 40 µm, further preferably within 30 µm from the outermost surface, in view of the meltability.

The reinforced portion 11 mentioned in the above (3) can be obtained, for example, by drying, or drying and firing the honeycomb molded material 22 made of a raw material for cordierite formation, then adhering a cordierite powder-containing slurry to each end 4 of each partition wall 3 in the vicinity of the two cell-opening end faces 8 and 9 of the resulting material, and drying and/or firing the slurry-adhered material. In this case, it is possible to fire the slurry adhered material at about 1,400°C [which is close to the melting point (1,450°C) of cordierite] to vitrify part of the cordierite powder to form a glass layer, and load a cordierite powder on the cordierite base material via the glass layer. The latter method is preferred because a honeycomb catalyst having a higher abrasion resistance can be obtained.

Meanwhile, in the present invention, it is possible to allow each reinforced portion 11 to have a larger wall thickness than the main portion 12 of partition wall constituting a partition wall portion other than the reinforced portion 11, as shown in Fig. 3.

Such reinforced portions 11 can be formed, for example, by drying, or drying and firing the honeycomb molded material and then dipping the resulting material in a slurry made of the same raw material as for the honeycomb molded material to coat the slurry on each predetermined partition wall portion of the material. In the reinforced portion 11, its maximum wall thickness is preferably 1.20 to 4.00 times the average wall thickness of the main partition wall portion 12 in view of the prevention of increase in pressure loss and a higher erosion resistance. Also, it is preferred for prevention of stress concentration that the wall thickness of the reinforced portion 11 decreases continuously or stepwise from at least one cell-opening end face 8 or 9 to the axial direction and is equal, at the boundary of the reinforced portion 11 and the main portion 12 of each partition wall, to the wall thickness of the main portion 12.

In the present invention, the reinforced portion 11 is preferred to be provided, in order to satisfy both of erosion resistance and low heat capacity, at part or the whole of each partition wall portion extending along the axial direction from at least one cell-opening end face 8 or 9 to a position of 30 mm or less, and is more preferred to be provided at part or the whole of a partition wall portion extending along the axial direction from at least one cell-opening end face 8 or 9 to a position of 1 to 10 mm. Further, the individual reinforced portions 11 may be provided at a constant length extending from at least one cell-opening end face 8 or 9 along the axial direction; however, they are preferred to be provided at different lengths in order to satisfy both of erosion resistance and low heat capacity.

As shown in Fig. 5, the honeycomb intermediate structure 31 obtained by the above steps has a plurality of partition walls 3 forming a plurality of cells adjacent to each other, wherein each partition wall 3 has, at each portion thereof extending, along the axial direction of the structure, from each of the two cell-opening end faces 8 and 9 of the structure to a given position, a reinforced portion 11 having an erosion resistance at least larger than that of other partition wall portion present inside the above partition wall portion. By, at this stage in which a honeycomb intermediate structure 31 having reinforced portions 11 has been produced, carrying the structure 31 to a place where catalyst loading is made and conducting a cutting step mentioned below, the damage such as chipping during carriage can be alleviated.

In the production process of the present invention, then, a catalyst 6 is loaded on each partition wall 3 of the honeycomb intermediate structure 31, as shown in Fig. 5(d). Thereafter, the resulting honeycomb intermediate structure 31 is cut from the side surface 18 along the diameter direction to obtain a honeycomb catalyst 41 which is a final product.

In the present invention, there is no particular restriction as to the kind of the catalyst 6 loaded on each partition wall 3. An appropriate catalyst may be selected depending upon the application of the honeycomb catalyst obtained. For example, when the honeycomb catalyst is used for purification of automobile exhaust gas, etc., a metal having a catalytic activity, such as Pt, Pd, Rh or the like may be used.

There is no particular restriction, either, as to the method for loading of catalyst 6. There can be mentioned, for example, a method of immersing the honeycomb carrier after firing, in a dispersion or solution of a catalyst metal, then pulling up the honeycomb carrier, and drying it at a given temperature.

In the present invention, there is no particular restriction, either, as to the method for cutting the honeycomb intermediate structure 31. Cutting may be conducted by an ordinary method using, for example, a diamond cutter, as schematically shown in Fig. 5(e).

The position at which the honeycomb intermediate structure 31 is cut, may be determined in view of the axial direction length of a honeycomb catalyst to be obtained finally. Ordinarily, cutting is made at a position of 1/5 to 4/5 of the axial direction length of the honeycomb intermediate structure 31 and, when honeycomb catalysts 41 of same size are obtained, cutting may be made at equal intervals.

In the present invention, the honeycomb intermediate structure 31 is cut so as to have a desired length, from the side surface 18 in the diameter direction, at a given position and, when, for example, bisected, at a position corresponding to 1/2 of the axial direction length. This cutting is preferred because a reduced pressure loss is obtained and breakage during transport is preventable, giving a higher production efficiency. It is also preferred to polish or cut the end 4 of each partition wall 3 at least at one cell-opening end face 8 or 9 (which is an end face opposite to the cut end face), because it gives a reduced pressure loss and can prevent secondary erosion. Incidentally, the polishing or cutting at the end 4 of each partition wall 3 may be conducted either after loading of a catalyst 6 on each partition wall 3 of honeycomb intermediate structure 31, or after cutting of honeycomb intermediate structure 31 from the side surface 18 in the diameter direction.

### Examples

The present invention is described more specifically below by way of Examples. However, the present invention is in no way restricted by these Examples.

### (Example 1)

There were mixed 100 parts by weight of a ceramic raw material for cordierite formation, 8 parts by weight of hydroxypropyl methyl cellulose, 0.5 part by weight of a potassium laurate soap, 2 parts by weight of a polyether and 28 parts by weight of water. The resulting mixture was fed into a continuous extruder provided with a die having slits of 0.064 mm in width and a cell block of square sectional shape, to produce a honeycomb molded material having a partition wall thickness of 0.064 mm and a cell density of 900 cells/in.² (140 cells/cm²). Then, the honeycomb molded material was made, by cutting, into a cylindrical material of 118.4 mm in diameter and 147.5 mm in height. The cylindrical material was fired at the maximum temperature of 1,430°C for 4 hours to produce a honeycomb carrier.

Separately, a sherd was mixed with water and further with a silica sol, followed by mixing. A slight amount of a surfactant was added to the resulting mixture to prepare a slurry for formation of reinforced portion. In this case, the slurry was allowed to contain total 40% by mass of solid components and the surfactant and 60% by mass of water. The solid components contained 90% by mass of the sherd of fine particles (1 to 2 µm in diameter) and 10% by mass of colloidal silica (silica sol: 30% by mass).

Next, the slurry was placed in a vessel up to a height of end reinforcement. Into the slurry in the vessel was immersed the fired honeycomb carrier for impregnation for 1 to 2 seconds in a state that the carrier touched the bottom of the vessel. Then, the impregnated honeycomb carrier was pulled up, some of the excessive slurry adhering to the honeycomb carrier was removed by shaking, and the surplus slurry remaining inside the cells was removed by air blowing. Then, after confirmation of no cell plugging, the honeycomb carrier was dried (about 130°C, air speed: 2 m/sec, 3 minutes or more) using a hot blaster and further dried (150°C, 1 hour or more) in a drier. Then, firing was conducted under the same conditions as employed in the above production of honeycomb carrier, to form, at each end of each partition wall at the two cell-opening end faces of the honeycomb carrier, a reinforced portion having a lower porosity than other portion of each partition wall, whereby a honeycomb intermediate structure was produced.

Then, the whole honeycomb intermediate structure was immersed for 2 minutes in a dispersion containing a catalyst metal and, as a main component, active alumina, and pulled up. Then, the surplus dispersion was removed as much as possible using compressed air; the resulting structure was dried at 120°C for 2 hours; the above operation from immersion in dispersion to drying was conducted twice; then, the resulting structure was fired at 700°C to load a catalyst on the honeycomb carrier.

Lastly, the catalyst-loaded honeycomb carrier was cut at a position of 1/2 of the axial direction length, from the side surface along the diameter direction, to produce two honeycomb catalysts.

In the honeycomb catalyst, the thickness of the partition wall base material was 0.064 mm. As to the thickness of the catalyst layer, there was no substantial thickness difference between the vicinity of partition wall intersection and other part, at each of the partition wall central portion present at the axial direction center of honeycomb catalyst wall and the partition wall end present at the cut-side end face of honeycomb catalyst, and the catalyst layer thickness at the partition wall central portion was 0.013 mm and the catalyst layer thickness of the above partition wall end was 0.014 mm.

### (Example 2)

A honeycomb catalyst was produced in the same manner as in Example 1 except that the die of continuous extruder used in Example 1 was replaced by a die having slits of 0.065 mm in width and a cell block of square sectional shape.

In the honeycomb catalyst, the thickness of the partition wall base material was 0.065 mm. As to the thickness of the catalyst layer, there was no substantial thickness difference between the vicinity of partition wall intersection and other part, at each of the partition wall central portion present at the axial direction center of honeycomb catalyst and the partition wall end present at the cut-side end face of honeycomb catalyst, and the catalyst layer thickness at the partition wall central portion and the catalyst layer thickness of the above partition wall end were each 0.016 mm.

### (Comparative Example 1)

A honeycomb catalyst was produced in the same manner as in Example 1 except that the cutting of honeycomb carrier was conducted before catalyst loading and thereafter the loading of catalyst on honeycomb intermediate structure was conducted.

In the honeycomb catalyst, the thickness of the partition wall base material was 0.064 mm. As to the thickness of the catalyst layer, the thickness was largest at the intersection of each partition wall at the partition wall end present at the cut-side end face of honeycomb catalyst and the largest thickness was 0.028 mm (the thickness in the direction of bisector of angle formed by two intersectional partition walls); and there was no variation in catalyst layer thickness at the central portion of each partition wall present at the axial direction center of honeycomb catalyst and the catalyst layer was 0.012 mm.

### (Comparative Example 2)

A honeycomb catalyst was produced in the same manner as in Example 1 except that as in Example 2, the die of continuous extruder used in Example 1 was replaced by a die having slits of 0.065 mm in width and a cell block of square sectional shape and that as in Comparative Example 1, the cutting of honeycomb carrier was conducted before catalyst loading and thereafter the loading of catalyst on honeycomb intermediate structure was conducted.

In the honeycomb catalyst, the thickness of the partition wall base material was 0.065 mm. As to the thickness of the catalyst layer, the thickness was largest at the intersection of each partition wall at the partition wall end present at the cut-side end face of honeycomb catalyst and the largest thickness was 0.035 mm (the thickness in the direction of bisector of angle formed by two intersectional partition walls); and there was no variation in catalyst layer thickness at the central portion of each partition wall present at the axial direction center of honeycomb catalyst and the catalyst layer was 0.015 mm.

### (Evaluation method and evaluation)

The honeycomb catalysts obtained in each Example and each Comparative Example were measured for inlet and outlet pressures when normal-temperature air was passed therethrough at two flow rates of 5 Nm³/min and 3 Nm³/min using a pressure loss measurement tester 51 shown in Fig. 6; and each difference thereof was calculated to evaluate the pressure loss of each honeycomb catalyst.

In the honeycomb catalysts obtained in Examples 1 and 2, the pressure loss was affected even by a very small partition wall thickness of 0.001 mm; however, in each honeycomb catalyst, the pressure loss was small (1.8 at a flow rate of 5 Nm³/min and 2.5 or less at a flow rate of 3 Nm³/min).

In contrast, in the honeycomb catalysts of Comparative Examples 1 and 2 wherein the catalyst layer was larger by at least 1.5 times at each partition wall end in the vicinity of each cell-opening end face of honeycomb catalyst, the pressure loss was very large at each of two flow rates (2.0 or more at a flow rate of 5 Nm³/min and 2.8 or more at a flow rate of 3 Nm³/min).

### Industrial Applicability

The honeycomb catalyst produced in the present invention can minimize the increase in pressure loss caused by loading of catalyst, as described previously, and can be suitably used particularly in a honeycomb catalyst having thin partition walls. The honeycomb intermediate structure used in the present invention is suited for production of the honeycomb catalyst; during the production, it does not require operations such as marking for indication of front side and therefore the burden to operator can be alleviated; the damage such as chipping during transportation, etc. can be prevented; and the deformation during firing can be decreased.

The process for producing a honeycomb catalyst according to the present invention can alleviate the burden to operator during production, is small in damage during production and deformation during firing, and can efficiently produce a honeycomb catalyst very low in pressure loss.

## Claims

1. A process for producing two honeycomb catalysts (41) each comprising a honeycomb structure having
a plurality of partition walls (3) which form a plurality of cells (1) adjacent to each other and extending in an axial direction of said honeycomb structure between opposite end faces (8,9) thereof at which said cells (3) are open, and
a catalyst (6) loaded on at least part of each partition wall (3)
the process comprising the steps of
(i) loading said catalyst (6) onto the partition walls of a honeycomb intermediate structure (31), and
(ii) dividing said honeycomb intermediate structure, after step (i) by cutting it from a side surface thereof in a direction perpendicular to said axial direction, thereby to produce said two honeycomb catalysts,
wherein said honeycomb intermediate structure (31) has a plurality of said partition walls (3) forming a plurality of said cells (1) adjacent to each other and extending in said axial direction between opposite end faces thereof at which said cells (1) are open, and each said partition wall (3) thereof has, along a length thereof extending from each said end face of said honeycomb intermediate structure (31) along said axial direction, a reinforced portion (11) having a larger erosion resistance than the other portion of the partition wall (3) extending between said respective reinforced portions (11),
whereby after said dividing step each of said two honeycomb catalysts has a said reinforced portion (11) at one end thereof.

2. A process according to claim 1 wherein said catalyst (6) loaded on each said partition wall (3) of the honeycomb catalyst (41) is a catalyst layer, and the maximum thickness of said catalyst later on a first portion of each partition wall (3) extending along the axial direction of the honeycomb structure from said end face at which said reinforced portion (11) is provided, is not greater than 1.5 times the maximum thickness of the catalyst layer on the other portion of the partition wall other than said first portion.

3. A process according to claim 1 or 2, wherein each said reinforced portion (11) is made of a material having a porosity of 30% or less.

4. A process according to any one of claims 1 to 3 wherein each said reinforced portion (11) is made of a material which contains a glass layer in a larger amount than said other portion of each partition wall.

5. A process according to any one of the preceding claims, wherein the intermediate honeycomb structure is formed of a cordierite base material and each said reinforced portion (11) is formed by loading a cordierite powder on the base material.

6. A process according to claim 5, wherein each reinforced portion (11) is formed by loading, on the surface of each partition wall made of the cordierite base material, the cordierite powder via a glass layer laminated on the surface of the base material.

7. A process according to any of the preceding claims, wherein each said reinforced portion (11) has a larger wall thickness than said other portion of the respective partition wall.

8. A process according to claim 7, wherein the maximum wall thickness of each said reinforced portion is 1.20 to 4.00 times the average wall thickness of said other portion of the respective partition wall.

9. A process according to claim 7 or 8, wherein the wall thickness of each said reinforced portion (11) changes continuously or stepwise from the respective end face of the honeycomb structure along the axial direction of the honeycomb structure and is equal, at the boundary of the reinforced portion (11) and said other portion of the respective partition wall, to the wall thickness of the main portion.

10. A process according to any one of the preceding claims, wherein each said reinforced portion (11) has a length of 30 mm or less.

11. A process according to claim 10, wherein the reinforced portions (11) are of different lengths.

12. A process according to any one of the preceding claims, wherein the minimum wall thickness of each partition wall (3) is in the range 0.030 to 0.076 mm.

13. A process according to any one of claims 1 to 12, wherein said honeycomb intermediate structure has an axial direction length of 80 to 200 mm.

14. A process according to any one of claims 1 to 13, wherein after step (ii), each partition wall end of at least one end face of the resulting structure is polished or cut.

15. A process according to any one of claims 1 to 14, wherein in the step (ii) the honeycomb intermediate structure is cut at substantially half its length along the axial direction.

## Patentansprüche

1. Verfahren zur Herstellung von zwei Wabenkatalysatoren, die jeweils eine Wabenstruktur umfassen, die Folgendes aufweist:
eine Vielzahl an Trennwänden (3), die eine Vielzahl an Zellen (1) bilden, die benachbart sind und sich in einer axialen Richtung der Wabenstruktur zwischen entgegengesetzten Endflächen (8, 9) davon erstrecken, an denen die Zellen (3) offen sind, und
einen auf zumindest einem Teil jeder Trennwand (3) aufgebrachten Katalysator (6),
wobei das Verfahren folgende Schritte umfasst:
(i) das Aufbringen des Katalysators (6) auf die Trennwände einer Wabenzwischenstruktur (31) und
(ii) das Teilen der Wabenzwischenstruktur nach der Ausführung des Schrittes (i) **dadurch**, dass sie von einer Seitenoberfläche in einer auf die axiale Richtung im rechten Winkel stehenden Richtung zerschnitten wird, wodurch zwei Wabenkatalysatoren erzeugt werden,
worin die Wabenzwischenstruktur (31) eine Vielzahl an Trennwänden (3) aufweist, um eine Vielzahl der Zellen (1) zu bilden, die benachbart sind und sich zwischen entgegengesetzten Endflächen, an denen die Zellen (1) offen sind, in axialer Richtung erstrecken, und jede Trennwand (3) entlang ihrer sich von jeder der Endflächen der Wabenzwischenstruktur (31) entlang der axialen Richtung erstreckenden Länge einen verstärkten Abschnitt (11) aufweist, der eine höhere Erosionsbeständigkeit aufweist als der andere Abschnitt der Trennwand (3), der sich zwischen den verstärkten Abschnitten (11) erstreckt,
wobei nach dem Schritt des Teilens jeder der beiden Wabenkatalysatoren einen verstärkten Abschnitt (11) an einem seiner Enden aufweist.

2. Verfahren nach Anspruch 1, worin der auf jede der Trennwände (3) des Wabenkatalysators (41) aufgebrachte Katalysator (6) eine Katalysatorschicht ist und die maximale Dicke der Katalysatorschicht auf einem ersten Abschnitt jeder Trennwand (3), die sich von den Endflächen, an denen der verstärkte Abschnitt (11) bereitgestellt ist, entlang der axialen Richtung der Wabenstruktur erstrecken, nicht mehr als das 1,5-Fache der maximalen Dicke der Katalysatorschicht auf dem anderen Abschnitt der Trennwand entspricht, der nicht dem ersten Abschnitt entspricht.

3. Verfahren nach Anspruch 1 oder 2, worin jeder der verstärkten Abschnitte (11) aus einem Material mit einer Porosität von 30 % oder weniger besteht.

4. Verfahren nach einem der Ansprüche 1 bis 3, worin jeder der verstärkten Abschnitte (11) aus einem Material besteht, das eine Glasschicht in höherem Ausmaß enthält als der andere Abschnitt jeder Trennwand.

5. Verfahren nach einem der vorangegangenen Ansprüche, worin die Wabenzwischenstruktur aus einem Cordieritbasismaterial besteht und jeder der verstärkten Abschnitte **dadurch** ausgebildet wird, das Cordieritpulver auf das Basismaterial aufgebracht wird.

6. Verfahren nach Anspruch 5, worin jeder verstärkte Abschnitt (11) **dadurch** ausgebildet wird, dass auf die Oberfläche jeder aus dem Cordieritbasismaterial bestehenden Trennwand das Cordieritpulver durch eine auf die Oberfläche des Basismaterials laminierte Glasschicht aufgebracht wird.

7. Verfahren nach einem der vorangegangenen Ansprüche, worin jeder verstärkte Abschnitt (11) eine größere Wanddicke aufweist als der andere Abschnitt der entsprechenden Trennwand.

8. Verfahren nach Anspruch 7, worin die maximale Wanddicke jedes verstärkten Abschnitts dem 1,20- bis 4,00-Fachen der mittleren Wanddicke des anderen Abschnitts der entsprechenden Trennwand entspricht.

9. Verfahren nach Anspruch 7 oder 8, worin sich die Wanddicke jedes verstärkten Abschnitts (11) kontinuierlich oder schrittweise von der jeweiligen Endfläche der Wabenstruktur entlang der axialen Richtung der Wabenstruktur verändert und an der Grenze des verstärkten Abschnitts (11) und des anderen Abschnitts der jeweiligen Trennwand der Wanddicke des Hauptabschnitts entspricht.

10. Verfahren nach einem der vorangegangenen Ansprüche, worin jeder der verstärkten Abschnitte (11) eine Länge von 30 mm oder weniger aufweist.

11. Verfahren nach Anspruch 10, worin die verstärkten Abschnitte (11) verschiedene Längen aufweisen.

12. Verfahren nach einem der vorangegangenen Abschnitte, worin die Mindestwanddicke jeder Trennwand (3) im Bereich von 0,030 bis 0,076 mm liegt.

13. Verfahren nach einem der Ansprüche 1 bis 12, worin die Wabenzwischenstruktur in axialer Richtung eine Länge von 80 bis 200 mm aufweist.

14. Verfahren nach einem der Ansprüche 1 bis 13, worin nach Schritt (ii) jedes Trennwandende zumindest einer Endfläche der resultierenden Struktur poliert oder abgeschnitten wird.

15. Verfahren nach einem der Ansprüche 1 bis 14, worin die Wabenzwischenstruktur in Schritt (ii) im Wesentlichen in der Hälfte ihrer Länge entlang der axialen Richtung zerschnitten wird.

## Revendications

1. Procédé de fabrication de deux catalyseurs en nid d'abeilles (41), comprenant chacun une structure en nid d'abeilles ayant
plusieurs parois de séparation (3) qui forment plusieurs alvéoles (1) adjacents les uns aux autres et s'étendant dans une direction axiale de ladite structure en nid d'abeilles entre des faces d'extrémité opposées (8, 9) de celle-ci auxquelles lesdits alvéoles (3) sont ouverts, et
un catalyseur (6) chargé sur au moins une partie de chaque paroi de séparation (3),
le procédé comprenant les étapes de
(i) charger ledit catalyseur (6) sur les parois de séparation d'une structure intermédiaire en nid d'abeilles (31), et
(ii) diviser ladite structure intermédiaire en nid d'abeilles, après l'étape (i) en la coupant depuis une surface latérale de celle-ci dans une direction perpendiculaire à ladite direction axiale pour produire ainsi les deux catalyseurs en nid d'abeilles précités,
où ladite structure intermédiaire en nid d'abeilles (31) possède plusieurs desdites parois de séparation (3) formant plusieurs desdits alvéoles (1) adjacents les uns aux autres et s'étendant dans ladite direction axiale entre des faces d'extrémité opposées de celle-ci auxquelles lesdits alvéoles (1) sont ouverts, et chaque paroi de séparation précitée (3) de celles-ci possède, sur une longueur de celles-ci s'étendant de chaque face d'extrémité précitée de ladite structure intermédiaire en nid d'abeilles (31) dans ladite direction axiale, une portion renforcée (11) ayant une plus grande résistance à l'érosion que l'autre portion de la paroi de séparation (3) s'étendant entre lesdites portions renforcées respectives (11),
par quoi, après ladite étape de division, chacun desdits deux catalyseurs en nid d'abeilles possède une portion renforcée précitée (11) à une extrémité de celui-ci.

2. Procédé selon la revendication 1, dans lequel ledit catalyseur (6) chargé sur chaque paroi de séparation précitée (3) du catalyseur en nid d'abeilles (41) est une couche de catalyseur, et l'épaisseur maximum dudit catalyseur plus tard sur une première portion de chaque paroi de séparation (3) s'étendant dans la direction axiale de la structure en nid d'abeilles depuis ladite face d'extrémité à laquelle ladite portion renforcée (11) est réalisée, n'est pas plus grande que 1,5 fois l'épaisseur maximum de la couche de catalyseur sur l'autre portion de la paroi de séparation autre que ladite première portion.

3. Procédé selon la revendication 1 ou 2, dans lequel chaque portion de renforcement précitée (11) est réalisée en un matériau d'une porosité de 30% ou moins.

4. Procédé selon l'une quelconque des revendications 1 à 3, dans lequel chaque portion renforcée précitée (11) est réalisée en un matériau qui contient une couche de verre en une plus grande quantité que ladite autre portion de chaque paroi de séparation.

5. Procédé selon l'une quelconque des revendications précédentes, dans lequel la structure intermédiaire en nid d'abeilles est réalisée en un matériau à base de cordiérite, et chaque portion renforcée précitée (11) est formée en chargeant une poudre de cordiérite sur le matériau de base.

6. Procédé selon la revendication 5, dans lequel chaque portion renforcée (11) est formée en chargeant, sur la surface de chaque paroi de séparation réalisée en matériau à base de cordiérite, la poudre de cordiérite par une couche en verre laminé sur la surface du matériau de base.

7. Procédé selon l'une quelconque des revendications précédentes, dans lequel chaque portion renforcée précitée (11) possède une plus grande épaisseur de paroi que ladite autre portion de la paroi de séparation respective.

8. Procédé selon la revendication 7, dans lequel l'épaisseur de paroi maximum de chaque portion renforcée précitée représente 1,20 à 4,00 fois l'épaisseur de paroi moyenne de ladite autre portion de la paroi de séparation respective.

9. Procédé selon la revendication 7 ou 8, dans lequel l'épaisseur de paroi de chaque portion renforcée précitée (11) change continuellement ou progressivement de la face d'extrémité respective de la structure en nid d'abeilles dans la direction axiale de la structure en nid d'abeilles et est égale, à la limite de la portion renforcée (11) et de ladite autre portion de la paroi de séparation respective, à l'épaisseur de paroi de la portion principale.

10. Procédé selon l'une quelconque des revendications précédentes, dans lequel chaque portion renforcée précitée (11) a une longueur de 30 mm ou moins.

11. Procédé selon la revendication 10, dans lequel les portions renforcées (11) ont des longueurs différentes.

12. Procédé selon l'une quelconque des revendications précédentes, dans lequel l'épaisseur de paroi minimum de chaque paroi de séparation (3) est dans la plage de 0,030 à 0,076 mm.

13. Procédé selon l'une quelconque des revendications 1 à 12, dans lequel ladite structure intermédiaire en nid d'abeilles possède une longueur dans la direction axiale de 80 à 200 mm.

14. Procédé selon l'une quelconque des revendications 1 à 13, dans lequel après l'étape (ii), chaque extrémité de paroi de séparation d'au moins une face d'extrémité de la structure obtenue est polie ou coupée.

15. Procédé selon l'une quelconque des revendications 1 à 14, dans lequel à l'étape (ii), la structure intermédiaire en nid d'abeilles est coupée sensiblement à la moitié de sa longueur dans la direction axiale.
